# EUROPEAN PATENT APPLICATION

(11) **EP 1 947 914 A1**
(43) Date of publication of application: **23.07.2008**
(21) Application number: 05795915.7
(22) Date of filing: 21.10.2005
(51) Int. Cl.: H05F 3/06

(54) **APPARATUS FOR ELIMINATING STATIC ELECTRICITY ON SEMICONDUCTOR SUBSTRATE AND LIQUID CRYSTAL SUBSTRATE SURFACES IN SEMICONDUCTOR AND LIQUID CRYSTAL MANUFACTURING PROCESSES**

(71) Applicant: Kondoh Industries Ltd., Tokyo 105-0001 (JP); Cambridge Filter Japan, Ltd., Tokyo 105-0001 (JP)
(72) Inventor: KISAKIBARU, Toshirou, Tokyo 105-0001 (JP); OKADA, Makoto, Tokyo 105-0001 (JP); HONDA, Yasushi, Tokyo 105-0001 (JP); IIDA, Naoji, Tokyo 105-0001 (JP)
(74) Representative: Thum, Bernhard
(86) International application number: PCT/JP2005/019401
(87) International publication number: WO 2007/046151

(57) **Abstract**

A remover that removes the static charges on surfaces of substrates of semiconductors and liquid crystals in the processes for manufacturing them is provided. A cylindrical filter in the remover cannot be affected by soft X-rays, and the X-rays cannot leak outside the guiding vessel.

A portion 1 for generating purified air that comprises a cylindrical filter 5, a portion 2 for irradiation of soft X-rays 19, and a portion 3 for blowing out the ionized purified air, are arranged in the direction of the air flow in a guiding vessel 4. Also, a shield 23 prevents the portion 1 for generating purified air from being exposed to the irradiation. Further, the portion 3 has a construction wherein the ionized purified air 35 is blown at an equal rate of flow along the longitudinal direction of the remover and prevents the soft X-rays 19 from leaking outside the guiding vessel 4.

## Description

### [Technical field]

The present invention relates to a remover that removes the static charges on surfaces of substrates of semiconductors and liquid crystals in the processes for manufacturing them.

### [Background of the Invention]

Many times a problem occurs such as static charges on surfaces of the substrates of semiconductors and liquid crystals causing their circuits to be broken, because the charges are built up on the surfaces during the processes of their being manufactured and handled.

To solve this problem, an ionizer is usually provided for each manufacturing device for semiconductors or liquid crystals, so as to remove the static charges on the surfaces of the substrates. There are two types of this ionizer. One is an electric ionizer, in which the air is ionized by applying a high voltage to it. The other is an ionizer using soft X-rays, in which the air is ionized by irradiating it with soft X-rays.

The electric ionizer is easy to handle, but has some problems such as wear of the electrode caused by discharging it at a high voltage, and some dust being generated and adhering to a substrate. Further, there is a problem such as a high-frequency noise being generated by the electric ionizer. It harms other devices.

Also, an ionizer using soft X-rays has problems such as the X-rays damaging human bodies, and the ionizer having to be constructed so that the X-rays cannot leak. However, a method for neutralizing the electrification of an object in accord with the conventional technology disclosed in Japanese Patent No. 2749202 does stop the leaking of the soft X-ray irradiation. Also, it has a problem such as its filter deteriorating because of the irradiation.

### [Summary of the Invention]

To solve the above problems, the present invention provides a remover that removes the static charges on surfaces of substrates of semiconductors and liquid crystals in the processes for manufacturing them. The remover uses an ionizer using soft X-rays. But it is constructed so that the X-rays cannot leak and the cylindrical filter in it cannot be affected by the X-rays.

The present invention solves the problems by adopting the following means. Namely, a portion for generating purified air that comprises a cylindrical filter, a portion for irradiation of soft X-rays having a passage for irradiation, and a portion for blowing out the ionized and purified air, are arranged in series in the direction of the air flow in a guiding vessel. Also, at the portion for generating purified air, a shield prevents the portion from being exposed to the X-rays. Further, the portion for blowing out the air comprises units for doing so. These units get only the ionized purified air to blow out, and they prevent the soft X-rays from leaking outside the guiding vessel.

The present invention is constructed as above. Accordingly, the purified air that is exhausted from the cylindrical filter is ionized by soft X-rays at the passage for irradiation. The ionized purified air flows through portions for blowing it out, and contacts substrates at a uniform rate of flow in the longitudinal direction of the cylindrical filter. Thus the static charges on the substrates are neutralized. Accordingly, the circuits on the substrates of semiconductors and liquid crystals will not be damaged by any electrostatic discharge during the process for manufacturing and handling their substrates. Therefore, the invention will contribute to improving the quality of products.

Also, from the portions for blowing out, only ionized and purified air is exhausted. Therefore, no soft X-rays leak out from the guiding vessel. Thus the safety for humans is guaranteed.

Further, since the cylindrical filter has a shield so as not to be directly irradiated by soft X-rays, the filter cannot deteriorate.

### [Brief Descriptions of the Drawings]

Fig. 1 is a lateral view of a longitudinal section of the remover that removes the static charges on surfaces of substrates of semiconductors and liquid crystals in the processes for manufacturing them, of the present invention.
Fig. 2 is a front view of the longitudinal section of the static remover.

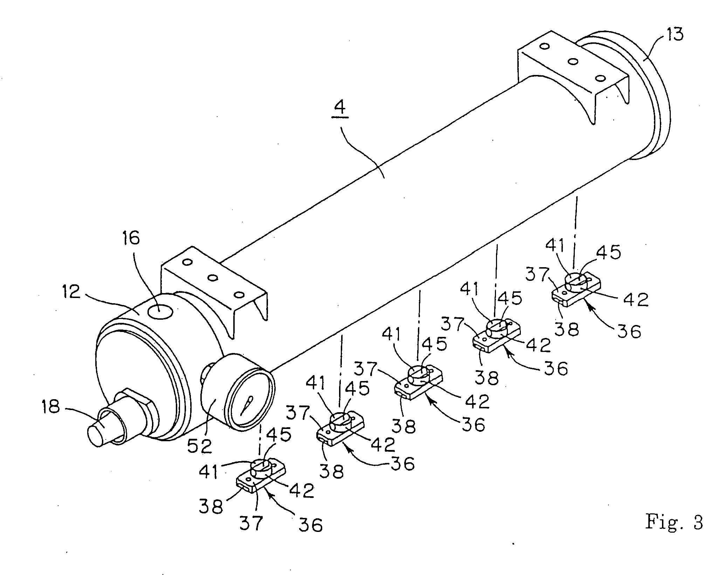

Fig. 3 is a perspective view of the remover that removes the static charges on surfaces of substrates of semiconductors and liquid crystals in the processes for manufacturing them, of the present invention.

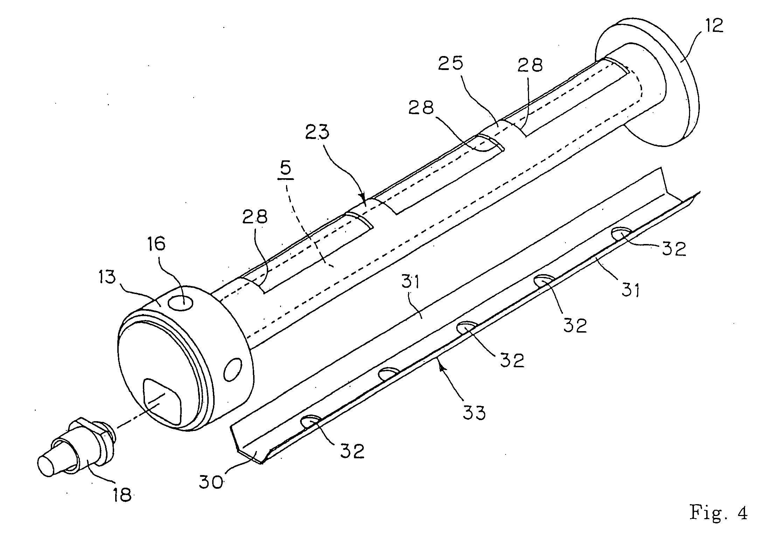

Fig. 4 is an exploded perspective view of the remover that removes the static charges on surfaces of substrates of semiconductors and liquid crystals in the processes for manufacturing them, of the present invention, without a guiding vessel.

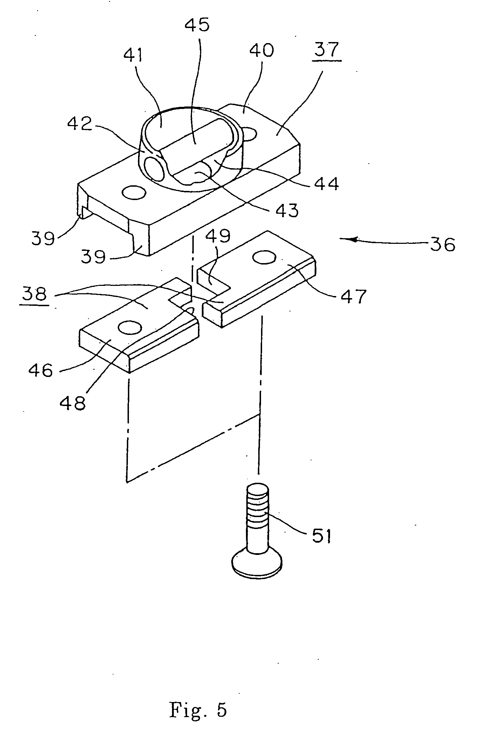

Fig. 5 is an exploded perspective view of a portion for blowing out the purified air of the remover that removes the static charges on surfaces of substrates of semiconductors and liquid crystals in the processes for manufacturing them, of the present invention.

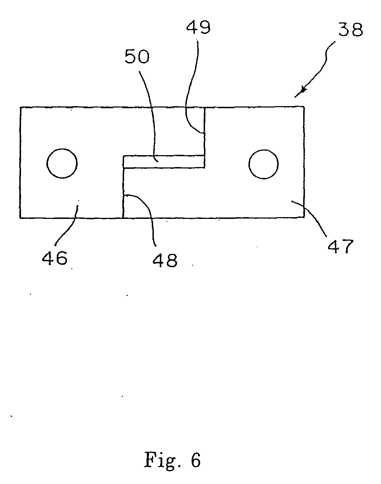

Fig. 6 is a plan view of pieces for forming a slit that is a part of the portion for blowing out the purified air of the remover that removes the static charges on surfaces of substrates of semiconductors and liquid crystals in the processes for manufacturing them, of the present invention.

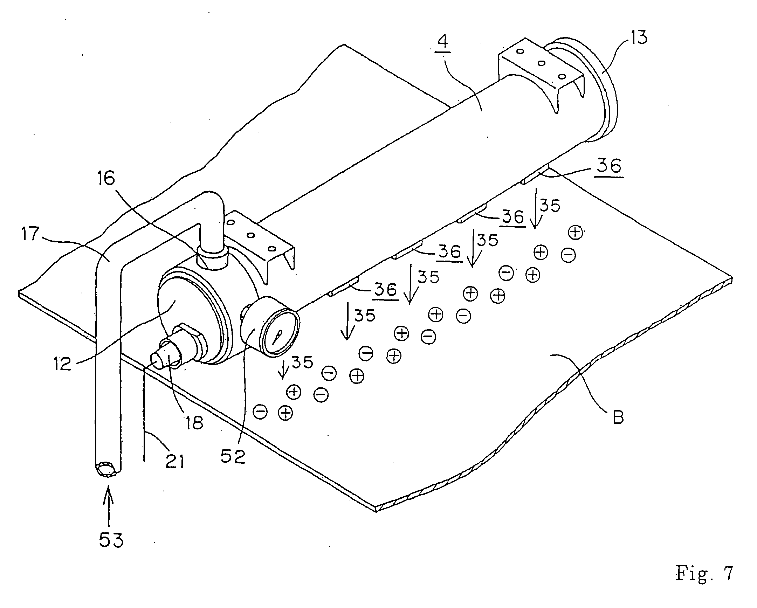

Fig. 7 is an exploded perspective view of a main part of the remover that removes the static charges on surfaces of substrates of semiconductors and liquid crystals in the processes for manufacturing them, of the present invention, showing its state when it is being used.

### [Description of a Preferred Embodiment]

A safe remover of static from surfaces of substrates for semiconductors and liquid crystals in the processes for their manufacture, which remover of static prevents the cylindrical filter from deteriorating and does not let soft X rays harm a human body, is realized as follows. A portion for generating purified air that comprises a cylindrical filter, a portion for irradiation of soft X-rays having a passage for irradiation, and a portion for blowing out the ionized purified air, are arranged in series in the direction of the air flow in a guiding vessel. Also, a shield prevents the portion for generating purified air from being exposed to the irradiation. Further, the portion for blowing out the air comprises units for blowing out the air. These units only cause the ionized purified air to blow out. They prevent the soft X-rays from leaking outside the guiding vessel.

### [Embodiment]

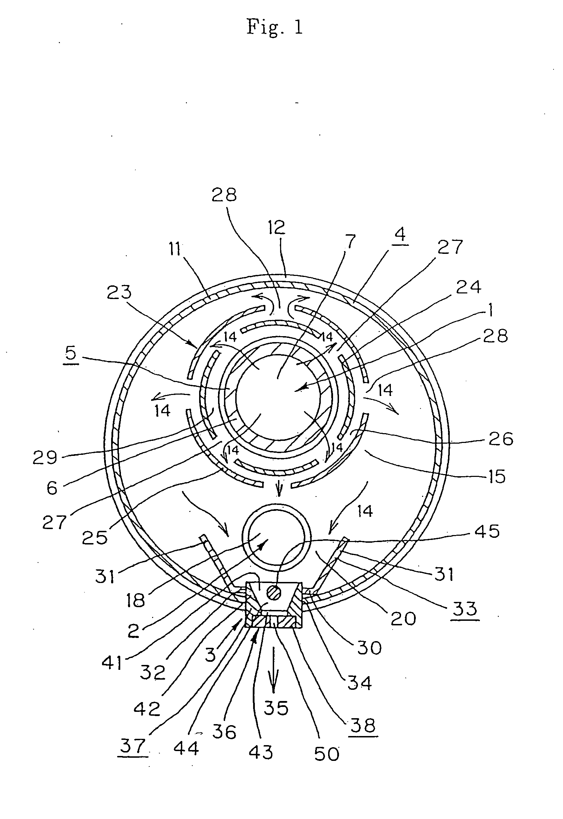

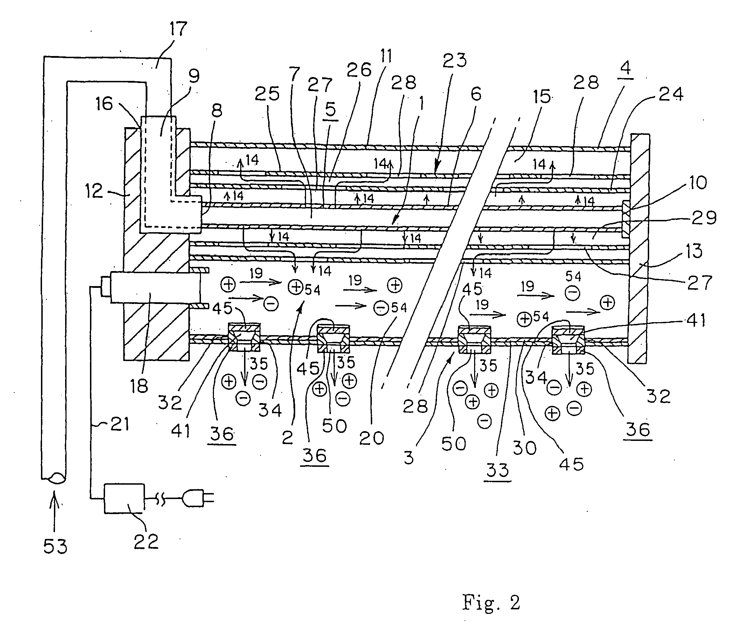

Now, we discuss one embodiment of the present invention by reference to the drawings. Fig. 1 is a lateral view of example. 1 of the present invention of the longitudinal section of the remover that removes the static charges on surfaces of substrates of semiconductors and liquid crystals in the processes for manufacturing them. Fig. 2 is a front view of the longitudinal section of it. To get purified air that has been ionized by being irradiated by soft X-rays to be effectively exhausted by the static remover, it is necessary to get the air to be exhausted before the ions are recombined (the needed time for recombination: 15 - 30 mm/sec). From this point, the remover of the present invention that removes the static charges on surfaces of substrates of semiconductors and liquid crystals in the processes for manufacturing them as in Figs. 1 and 2 has provided a portion 1 for generating purified air, a portion 2 for irradiation by soft X-rays, and a portion 3 for blowing out the purified air, in the direction of the air flow in a guiding vessel 4. Thus, the portion 2 for irradiation and the portion 3 for blowing out can be arranged so that they are as close to each other as possible. Therefore, the ionized purified air can be exhausted from the guiding vessel 4 in a short time, without any of the soft X-rays leaking.

The portion 1 for generating purified air comprises a cylindrical filter 5. It is formed by forming a filter media 6 as a cylinder and forming its hollow portion as a space 7 for ventilation. A ring 9 that has a port 8 for supplying air is fixed on one end of the filter 5 and a seal plug 10 is fixed on the other end of it. Preferably, it is recommended that the cylindrical filter 5 be manufactured by the method disclosed in Japanese Patent Laid-open No. 2003-23768, but it is not restricted to this.

The guiding vessel 4, in Fig. 1, is formed as an elongated cylindrical body 11. However, it should not be restricted to being cylindrical, but may be a polygonal body. The vessel 4 is made by fixing sidewalls 12, 13 on both sides of the elongated cylindrical body 11. The cylindrical filter 5 is inside the vessel 4, being fixed to both its ends on the sidewalls 12, 13. The space 15, for exhausted purified air 14, which is filtered by the filter 5, is provided around the filter 5 and inside the vessel 4.

An air-conducting port 16 that communicates with the ring 9 for supplying air to the cylindrical filter 5 is provided on the sidewall 12. Also, the end of a pipe 17 for supplying compressed air from an air blower (not shown) is attached to the port 16. Further, a passage 20 for irradiation by the soft X-rays 19 is irradiated by an ionizer 18 that uses soft X-rays. The passage 20 is a part of the portion 2 for irradiation. The portion 3 for blowing out the purified air, which portion 3 is provided downstream of the guiding vessel 4, is arranged in the direction of the air flow in the vessel 4

The portion 2 for irradiation by soft X-rays is made by inserting an ionizer 18 that uses soft X-rays through the sidewall 12. The portion 2 is fixed on the sidewall 12. The sidewall 12 faces the passage 20 for irradiation in the guiding vessel 4. Number 21 in the figure denotes the cable that supplies power to the ionizer 18 from a power source 22.

In a space 15 for the exhaust air to which the purified air 14 is exhausted through the filter from the space 7 for ventilation inside the cylindrical filter 5 in the guiding vessel 4, a shield 23 is provided. It is wrapped around the cylindrical filter 5. The shield 23 protects the cylindrical filter 5 from direct irradiation by the soft X-rays 19 from the ionizer 18.

Namely, the shield 23 is composed of an inner cover 24 and an outer cover 25 with a space between them. The inner and the outer cover 24 and 25 have a plurality of rectangular slits 27 and 28 for an air flow. The slits are the passages for the purified air 14 from the cylindrical filter 5. The passages are arranged in a zigzag pattern so that the soft X-rays 19 cannot go directly through the slits, and so that they are prevented from going straight, and so that the purified air 14 is forced to snake through them and have a turbulent flow. The inner and the outer cover 24 and 25 are made cylindrically, but they may be a polygonal cylinder.

The shield 23 as constructed above is arranged with a space 29 between the inner cover 24 and the cylindrical filter 5. Both ends of the shield 23 are fixed on both sidewalls 12 and 13 of the guiding vessel 4.

Portions 3 for blowing out the ionized purified air are formed by fixing a guide plate 33 and utits 36 for blowing out the air on a downstream region inside the guiding vessel 4. The guide plate 33 is formed by fixing guide pieces 31 on both longitudinal sides of a plate 30 that is put on the downstream region inside the guiding vessel 4 so that the outer sides of the pieces 31 that are opposite the fixed side to the plate 30 turn face up, and so that a plurality of through holes 32 on the plate 30 with a predetermined intervals are made. A plurality of holes 34 that are connected with the through holes 32 are made on the downstream region inside the guiding vessel 4. The units 36 for blowing out the air are fixed by inserting them through the holes 34 and the through holes 32, and through the units 36. The purified air 35 that is ionized by the soft X-rays 19 is exhausted.

Namely, each unit 36, for blowing out the air, is made so that only the ionized purified air 14 from the cylindrical filter 5 that is irradiated by the soft X-rays 19 in the passage 20 for irradiation is blown onto semiconductors or substrates B of liquid crystals. Also, each unit 36 is made so that the soft X-rays 19 do not leak from the guiding vessel 4.

Each unit 36, for blowing out the air, comprises a guide plate 37 for an air flow, and plates 38 for forming a slit that are fixed on the plate 37. The plate 37 is made by fixing a guide tube 42 on the center of a rectangular base material 40. The guide tube 42 has a bowl-shaped concave portion 41 that opens upstream of the air flow. The concave portion 41 has an air hole 43 at its center. The hole 43 is located downstream of the flow. A blocking rod 45 is fixed in parallel with the base material 40 across the center of the concave portion 41. The rod 45 has a clearance 44 between itself and the air hole 43 at a location inside the concave portion 41 of the guide tube 42. At the air hole 43 a blocking rod 45 can prevent the soft X-rays 19 from leaking outside through the hole 43. Thus each unit 36 is made so as to prevent the soft X-rays 19 from directly irradiating the air hole 43 and from leaking outside the guiding vessel 4.

The plates 38, which are parts of each unit 36 for blowing out the air, comprise two pieces of plates 46, 47 for forming a slit in a longitudinal direction of the vessel 4, so as to form a slit 50 through which the ionized purified air 35 is exhausted. Namely, the plates 38 for forming a slit comprise the two pieces of plates 46, 47. The plates 38 have a width such that they can be inserted between bent parts 39 of the guide plate 37 for the air flow. One side of each plate 46 and 47 has a cut region 48 or 49 so that one region faces the other. These regions 48 and 49 form a slit 50 for blowing out the ionized purified air. The slit is rectangular. It has a longer side in the longitudinal direction when the plates 46 and 47 abut each other.

Then, the pieces 46, 47 for forming a slit abut each other and are inserted between the bent pieces 39 of the guide plate 37 for air flow. Next, the guide tube 42 is inserted into both the continuous holes 34 of the elongated cylindrical body 11 and the through holes 32 of the guide plate 33. Then the units 36 for blowing out the air are fixed to the body 11 by screws 51. The number 52 denotes a pressure gauge that indicates the pressure of the compressed air 53 that is run into the cylindrical filter 5.

Below we discuss the working of the present invention of the above-constructed remover that removes the static charges on surfaces of substrates of semiconductors and liquid crystals in the processes for manufacturing them. Compressed air 53 flows into the space 7 for ventilation in the cylindrical filter 5 that forms a portion 1 for generating purified air. Since the other end of the filter 5 is blocked by a seal plug 10, the air 53 is disturbed inside the space 7 and filtered by the filter media 6. Then, the air 53 becomes purified air 14. It flows out through entire area of the surface of the cylindrical filter 5, at an equal rate of flow along its longitudinal direction, to the space 29, between the filter 5 and the inner cover 24 of the shield 23. The shield 23 is provided in the space for exhausted air 15.

Next, the purified air 14 that flows into the space 29 at an equal rate of flow along the longitudinal direction flows into the space 26 between the inner and outer covers 24 and 25 of the shield 23. Then, the air 14 flows out of the shield 23 through the slits 28 of the outer cover 25 to the space 15 for exhaust air. Then it flows into the passage 20 for irradiation that forms a portion 2 for irradiation of soft X-rays.

Since the shield 23 is provided, the purified air 14 that flows out through the entire area of the surface of the cylindrical filter 5 is disturbed inside the inner and outer covers 24 and 25 of the shield 23. Then the flow of the air 14 becomes uniform, and then flows into the passage 20 for irradiation.

Meanwhile, when the ionizer 18 that uses soft X-rays is powered from a power source 22, the soft X-rays 19 are irradiated by the ionizer 18 inside the passage 20 for irradiation. Then, the purified air 14, which has flowed inside the passage 20 at a uniform rate along the longitudinal direction of the passage 20, is ionized (plus or minus ions) 54 by the soft X-rays 19.

In the passage 20 for the irradiation of the soft X-rays 19, the purified air 14 from the cylindrical filter 5 is ionized by being irradiated by the soft X-rays 19. The air becomes an ionized purified air 35 that has a uniform velocity along the longitudinal direction. The ionized purified air 35 flows downstream to the units 36 for blowing out the air. They make a portion 3 for blowing out the purified air.

The ionized purified air 35, which has flowed into the units 36 for blowing out the air at the uniform rate along the longitudinal direction, is guided by the guide pieces 31 of the guide plate 33. Then the air flows down along the surface of the inner wall of the bowl-shaped concave portion 41 that is a part of each unit 36 for blowing out the air. Namely, since the purified air 35 is exhausted through the cylindrical filter 5 at a uniform rate along its longitudinal direction, the air blows onto the substrates B through air holes 43 and the slits 50 at a uniform rate along the longitudinal direction of the portion 3 for blowing out the ionized purified air. Thus the static charges on the surfaces of the substrates B are neutralized.

The width of the slit 50 for blowing out the air is set so that the pressure inside the cylindrical filter 5 is higher than that inside the guiding vessel 4, to let the ionized purified air 35 be exhausted from the slits 50 for blowing out the air at a uniform rate along the longitudinal direction.

As discussed above, the shield 23 adopts such a structure wherein it comprises an inner and outer cover. Each has a plurality of slits 27 or 28 arranged in a zigzag pattern so that the slits are not radially continuous, and so that the shield 23 rolls up the cylindrical filter 5. Accordingly, the filter media 6 of the cylindrical filter 5 will not be exposed to the soft X-rays 19, and thus the media 6 will not be deteriorated.

Between the passage 20 for irradiation and each slit 50 for blowing out the air, the bowl-shaped concave portion 41 and the blocking rod 45 is fixed. The blocking rod 45 is provided across the concave portion 41. The ends of the rod 45 are fixed to the inner wall of the portion 41. Also, the angle between the directions of the irradiation of the soft X-rays 19 and the flow of the ionized purified air 35 is 90 degrees. Accordingly, the soft X-rays 19 will not go straight. Also, since the concave portion 41 is shaped like a bowl, even if the soft X-rays 19 should irradiate its inner wall, the secondary soft X-rays will irradiate in the upstream direction or the lateral direction, and they will not irradiate in the downstream direction of the flow of ions. Also, since the blocking rod 45 prevents the soft X-rays 19 from going straight to the air hole 43, the rays 19, which are harmful to humans, will not leak outside of the guiding vessel 4. Further, the cross section of the rod 45 is circular. So the fluid resistance is small when the ionized purified air 35 flows through the slit 50 for blowing out the air. Therefore, the ionized purified air 35 can flow through every slit 50 to the substrates B at a uniform rate of flow along the longitudinal direction.

## Claims

1. A remover that removes the static charges on surfaces of substrates of semiconductors and liquid crystals in the processes for manufacturing them, comprising
a portion for generating purified air that comprises a cylindrical filter,
a portion for irradiation by soft X-rays having a passage for irradiation, and
a portion for blowing out the ionized purified air,
wherein the portions are arranged in series in the direction of air flow in a guiding vessel, the portion for generating purified air is prevented from being exposed to the soft X-rays by a shield, and the portion for blowing out the air comprises units for blowing out the air, which units get only the ionized purified air to blow out and prevent the soft X-rays from leaking outside the guiding vessel.

2. The remover that removes the static charges on surfaces of substrates of semiconductors and liquid crystals in the processes for manufacturing them of claim 1, wherein each of the units for blowing out the air comprises a bowl-shaped concave portion, an air hole that is drilled on the concave portion, and a blocking rod that is located inside the concave portion at a location where the rod can prevent the soft X-rays from leaking outside through the air hole, and which blocking rod is fixed across the concave portion and which portion has a clearance between the rod and the air hole 43.
